Europäisches Patentamt

European Patent Office

Office européen des brevets

(11) Veröffentlichungsnummer: **0 063 217**
**B1**

(19)

(12) **EUROPÄISCHE PATENTSCHRIFT**

(45) Veröffentlichungstag der Patentschrift:
**08.08.84**

(21) Anmeldenummer: **82101223.4**

(22) Anmeldetag: **18.02.82**

(51) Int. Cl.³: **A 47 L 9/26, H 02 G 11/02, H 04 M 1/15**

(54) Vorrichtung zum Speichern von Elektrokabeln.

(30) Priorität: **04.04.81 DE 8110209 U**

(43) Veröffentlichungstag der Anmeldung:
**27.10.82 Patentblatt 82/43**

(45) Bekanntmachung des Hinweises auf die Patenterteilung:
**08.08.84 Patentblatt 84/32**

(84) Benannte Vertragsstaaten:
**AT CH DE FR GB IT LI SE**

(56) Entgegenhaltungen:
**EP - A - 0 044 490**
**DE - C - 653 166**
**FR - A - 789 378**
**FR - A - 2 325 593**
**NL - A - 57 858**

(73) Patentinhaber: **Vorwerk & Co. Interholding GmbH,
Mühlenweg 17-35, D-5600 Wuppertal 2 (DE)**

(72) Erfinder: **Strohmeyer, Rolf, Echoerstrasse 54,
D-5600 Wuppertal 21 (DE)**
Erfinder: **Hoesch, Christoph, Hünninghauserweg 95,
D-4300 Essen 14 (DE)**
Erfinder: **Gühne, Wieland, Fürberg 13a,
D-5630 Remscheid (DE)**

(74) Vertreter: **Rieder, Hans-Joachim, Dr. et al,
Corneliusstrasse 45 Postfach 11 04 51,
D-5600 Wuppertal 11 (DE)**

## Beschreibung

Die Erfindung betrifft eine Vorrichtung zum Speichern von Elektrokabeln, insbesondere an Staubsaugern, mit einem Drehantrieb zum Einstoßen und Ablegen des Elektrokabels in einzelnen übereinander angeordneten Schlaufen in einem Vorratsraum, welcher Drehantrieb gekuppelt ist mit eingangsseitig des Vorratsraumes angeordneten Walzen, welche Nuten besitzen zum reibungsschlüssigen Einklemmen des Elektrokabels.

Bei den bekannten Ausführungsformen dieser Art (NL-A-57 858) besteht der eigentliche Vorratsraum zur Ablegung des Elektrokabels aus einem Ringraum. Die Ringstruktur ist gebildet durch ein rundes Außengehäuse und einem auf dem Boden dieses Gehäuses angeordneten Dom. Es sind drei mit dem Drehantrieb verbundene Walzen vorgesehen zum Einstoßen und Ablegen des Elektrokabels im Ringraum. Zwei kleinere Walzen sorgen dafür, daß das Elektrokabel über eine erhebliche Länge mit einem bogenförmig ausgebauchten Abschnitt in Anlagestellung zu einer größeren Walze liegt. Diese Drei-Walzen-Abstützung des Elektrokabels unter Ausbauchung eines Kabelabschnittes verhindert, daß sich die beim Abziehen des Elektrokabels über Kopf bei jeder abgezogenen Kabelwindung ergebende Vergrößerung des Dralles (Verwindung des Elektrokabels um seine eigene Achse) auf das ganze Elektrokabel, also auch auf den herausgezogenen Kabelabschnitt verteilt. Je mehr Elektrokabel man herauszieht, desto stärker vergrößert sich der Drall in dem noch im Vorratsraum verbleibenden Abschnitt. Dies bringt Schwierigkeiten beim anschließenden Ablegen des Elektrokabels in einer gewissen platzsparenden Ordnung. Letzteres ist nur möglich, wenn der den Ringraum bildende mittlere Dom vorhanden ist und auch dann nur in sehr begrenzten Längen.

Aufgabe der Erfindung ist es, eine gattungsgemäße Vorrichtung so auszubilden, daß unter Vermeidung der obgien Nachteile bei vereinfachter Bauform trotzdem ein geordnetes Ablegen des Elektrokabels im Vorratsraum auftritt, dies insbesondere auch dann, wenn man nach vollständigem Abzug der gesamten Kabellänge aus dem Vorratsraum das Kabel wieder zur Ablage im Vorratsraum über Kopf in diesen einstößt.

Dies ist erfindungsgemäß dadurch erreicht, daß lediglich zwei das Elektrokabel einklemmende Walzen zwischen den Seitenwänden des schachtförmig gestalteten freien Vorratsraumes gelagert sind, im Mittelbereich der Schachtmündung sitzen und die Länge des Schachtes ein Vielfaches der Breite des Schachtes ausmacht.

Eine vorteilhafte Lösung besteht hierbei erfindungsgemäß darin, daß die beiden Walzen zueinander in Zahneingriff stehen und der Antrieb aus einem Übersetzungs-Zahnriementrieb besteht.

Zufolge dieser Ausgestaltung ist eine Vorrichtung zum Speichern von Elektrokabeln geschaffen, die äußerst einfach im Aufbau und funktionssicher ist und die zu einer überraschend geordneten Ablage des Elektrokabels im schaftförmigen Vorratsraum führt und dadurch auch sehr platzsparend gestaltet werden kann. Die sich beim Abziehen des Elektrokabels über Kopf ergebenden Drall-Gänge des Elektrokabels stauen sich nicht im Vorratsraum; zufolge des lediglich zwischen zwei Walzen eingeklemmten Elektrokabels verteilen sich die Drall-Gänge vielmehr über die gesamte Kabellänge, also auch über den herausgezogenen Kabelabschnitt. Das Elektrokabel kann sich dabei um seine eigene Achse in den Nuten der Walzen leicht drehen. Das begünstigt beim anschließenden Einstoßen des Elektrokabels und Ablegen desselben über Kopf, daß die dabei stattfindende Ent-Drallung Windung für Windung fortschreitet. Es ergibt sich dadurch sogar ein begünstigtes Ablegen, insbesondere in einem entsprechenden rechteckigen Schacht. Die Rechteckform des Schachtes erlaubt auch eine günstige Lagerung der Walzen zwischen den Schachtwänden bzw. die vorteilhafte Ausbildung des Übersetzungs-Zahnriementriebes.

Es ist zwar bereits bekannt, bei Kabelaufwikkelvorrichtungen nur zwei Walzen vorzusehen, zwischen denen das Elektrokabel in geradliniger Erstreckung durchläuft. Soweit es sich bei diesen Lösungen um Kabelaufwickelvorrichtungen handelt, die das Elektrokabel auf eine Trommel aufwickeln anstatt frei über Kopf abzulegen (DE-C-653 166 bzw. EP-A-0 044 490 bzw. FR-A-2 325 593), tritt die dem Gegenstand der Erfindung zugrundeliegende Aufgabe überhaupt nicht auf, weil bei einem solchen Aufwickeln und Abwickeln eines Elektrokabels auf Trommeln gar keine Drall-Wirkung zustandekommt wie beim Abziehen über Kopf. Dafür sind diese Konstruktionen allerdings hinsichtlich der notwendigen Trommel, deren Lagerung und ruckartige Beschleunigung beim Abziehen sehr problematisch. Soweit es sich bei diesen das Elektrokabel zwischen zwei Walzen führende Konstruktionen um solche handelt, die keine Wickeltrommel für das Elektrokabel benutzen (FR-A-789 378), hat man dem geordneten Ablegen des Elektrokabels über Kopf keine Bedeutung beigemessen, sondern vielmehr das Elektrokabel noch ungeordnet in einen Freiraum eingestoßen. In diesem Fall können aber keine großen Kabellängen raumsparend untergebracht werden, welche Problematik sich bei diesen vorbekannten Einrichtungen auch schon deshalb nicht stellte, weil dort die Walzen von einem Federwerk angetrieben sind, so daß die Rückzugslänge des in den Raum einzustoßenden Elektrokabels sowieso sehr begrenzt ist aus der Rückspulkapazität der Federn, begrenzt bspw. auf die Länge einer Telefonhörerschnur.

Nachstehend wird ein Ausführungsbeispiel der Erfindung anhand der Fig. 1 bis 3 erläutert. Es zeigt

Fig. 1 teils in Ansicht, teils im Schnitt eine Vorrichtung zum Speichern von Elektrokabeln bei vollständig in den Vorratsraum hineingestoßenem Kabel,

Fig. 2 einen Vertikalschnitt durch die Vorrichtung, wobei das Kabel vollständig dem Vorratsraum entnommen ist, und

Fig. 3 eine Draufsicht auf die Vorrichtung.

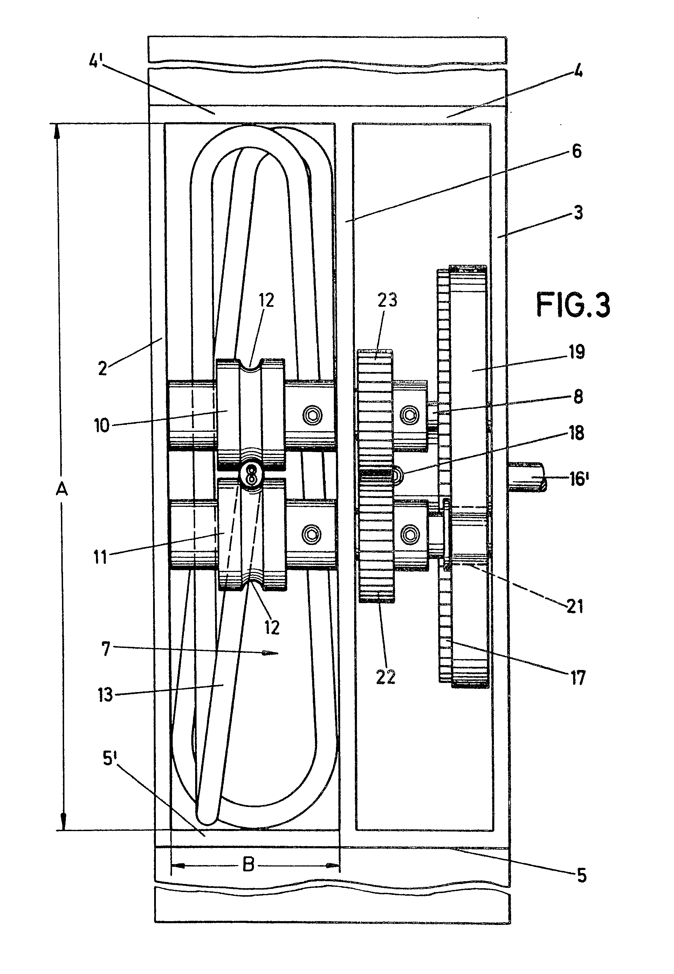

Die Vorrichtung besitzt den Boden 1, die beiden äußeren Seitenwände 2, 3 und Schmalwände 4, 5. Ferner erstreckt sich zwischen den beiden Seitenwänden 2, 3 eine weitere die Schmalwände 4, 5 verbindende Seitenwand 6. Die Seitenwände 2, 6 bilden in Verbindung mit den Abschnitten 4', 5' der Schmalwände 4 bzw. 5 einen im Querschnitt rechteckigen, als Schacht 7 ausgebildeten Vorratsraum. Aus Fig. 3 ist ersichtlich, daß die Länge A des Schachtes 7 ein Vielfaches der Breite B des Schachtes ausmacht, und zwar ist beim Ausführungsbeispiel ein Verhältnis von 4 : 1 gewählt.

Im Bereich der Schachtmündung 7' sind zwei parallel zueinander angeordnete, die Seitenwände 2, 3 und 6 durchsetzende Wellen 8 und 9 gelagert. Auf den sich in der Schachtmündung erstreckenden Wellenabschnitten sitzen drehfest Walzen 10, 11. Umfangsseitig sind in dem verdickt ausgebildeten Bug Ringnuten 12 eingearbeitet derart, daß die Walzen 10, 11 einen kreisförmigen Durchtrittsquerschnitt für ein Kabel 13 formen. Der von den Walzen gebildete Durchtrittsquerschnitt ist etwas geringer als der Durchmesser des Kabels 13, so daß dieses reibungsschlüssig zwischen den Walzen 10, 11 eingeklemmt ist.

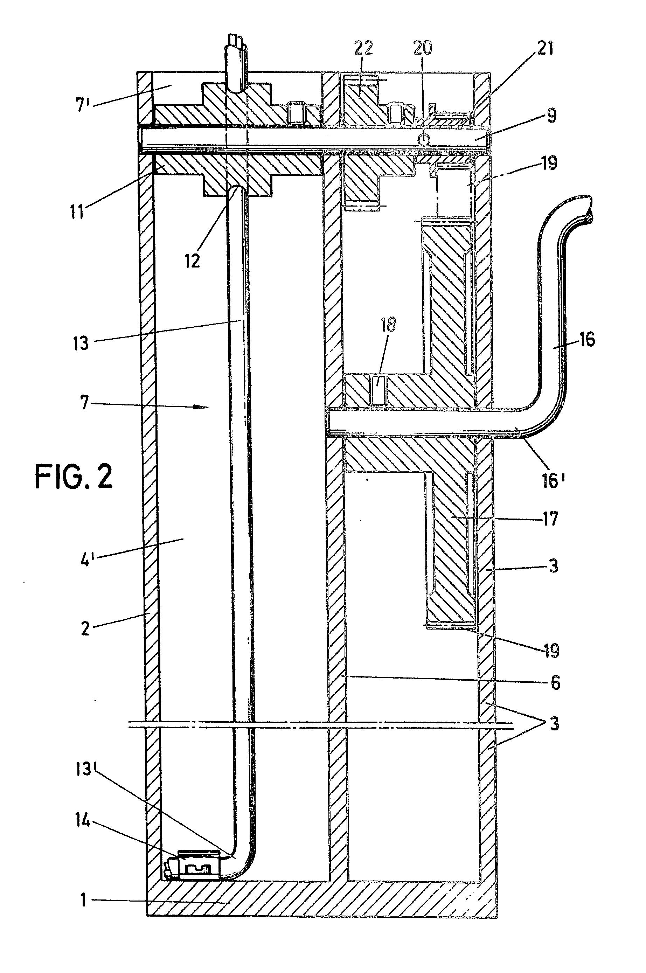

Aus Fig. 2 geht hervor, daß das innenseitige Ende 13' des Kabels 13 am Schachtboden 7 mittels einer Klemme 14 festgelegt ist. Von dort führt das Kabel zu einem nicht dargestellten Stromanschluß. Das andere Ende 13'' des Kabels ist mit einem Stecker 15 versehen.

Zwischen den Seitenwänden 3, 6 ist der Drehantrieb für die Walzen untergebracht. Im einzelnen besitzt dieser eine Handkurbel 16, dessen in den Seitenwänden 3, 6 gelagerte Kurbelachse 16' eine außenverzahnte, sich zwischen den Seitenwänden 3, 6 erstreckende Riemenscheibe 17 trägt. Eine Schraube 18 verbindet die Riemenscheibe 17 drehfest mit der Kurbelachse 16'. Um die Riemenscheibe 17 ist ein Zahnriemen 19 gelegt, der seinerseits ein auf der Welle 9 mittels eines Zapfens 20 drehfest angeordnetes Riemenrad 21 antreibt. Ferner sitzt drehfest auf der Welle 9 ein stirnverzahntes Zahnrad 22. Dieses steht in Eingriff mit einem auf der anderen Welle 8 fixierten Zahnrad 23.

Anstatt wie dargestellt, könnte die Walze 10 in Richtung der anderen Walze 11 abgefedert sein, um den Reibungsschluß zwischen Kabel 13 und den Walzen zu variieren.

Soll eine entsprechende Länge von Kabel 13 dem schachtförmigen Vorratsraum 7 entnommen werden, so ist eine Zugkraft am Stecker 15 bzw. am aus den Walzen 10, 11 austretenden Kabelende auszuüben. Die Walzen 10, 11 werden hierbei reibungsschlüssig mitgenommen, wobei die Walze 11 ihre Drehbewegung auf dem Drehantrieb überträgt. Dieser beeinträchtigt jedoch nicht das Abziehen des Kabels. Der Kabelzug wird begrenzt durch das am Schachtboden fixierte Kabelende 13', vergl. Fig. 2.

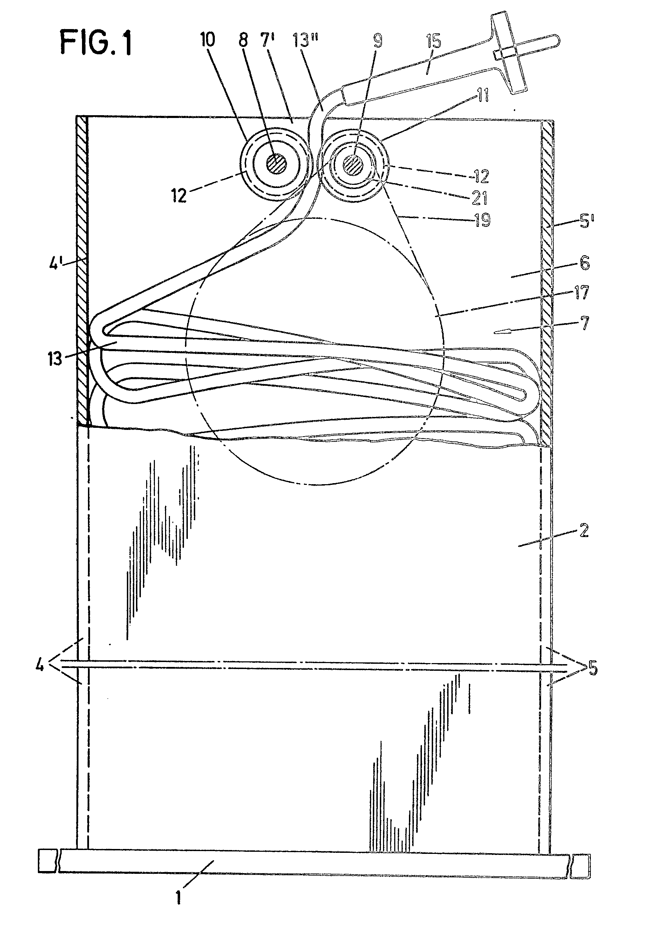

Soll das abgezogene Kabel in den Vorratsraum 7 zurückbefördert werden, so ist die Handkurbel 16 im Uhrzeigersinn zu drehen. Die diese Drehung mitmachende Riemenscheibe 17 treibt über den Zahnriemen 19 das Riemenrad 21 an. Dadurch dreht sich die Welle 9 mit der auf ihr befestigten Walze 11 und dem Zahnrad 22. Letzteres treibt über das Zahnrad 23 die andere Welle 8 und die darauf sitzende Walze 10 an, so daß das reibungsschlüssig von den Walzen 10, 11 eingeklemmte Kabel 13 in den Vorratsraum hineingestoßen wird. Die Schachtschmalwände 4' erzwingen eine Umlenkung des hineingestoßenen Kabels 13 unter Erzielung einer schlaufenartigen Selbstlegung, wie es in Fig. 1 und 3 veranschaulicht ist. Da die Schlaufenabschnitte ungleichmäßig zueinander liegen, ist die Gefahr einer Erwärmung durch Induktion bei hohen Stromanschlußwerten und bei nur teilweiser Kabelentnahme vermieden.

Anstelle der Kurbelachse 16' könnte auch eine fremd-gesteuerte Welle vorgesehen sein, die bei Anordnung einer solchen Vorrichtung an einem Staubsauger von dem Staubsaugermotor in Umdrehung versetzt wird, und zwar unter Zwischenschaltung einer Kupplung.

Patentansprüche

1. Vorrichtung zum Speichern von Elektrokabeln, insbesondere an Staubsaugern, mit einem Drehantrieb (16, 17, 18, 19, 20, 21, 22, 23) zum Einstoßen und Ablegen des Elektrokabels (13) in einzelnen übereinander angeordneten Schlaufen in einem Vorratsraum (7), welcher Drehantrieb gekuppelt ist mit eingangsseitig des Vorratsraumes angeordneten Walzen (10, 11) welche Nuten (12) besitzen zum reibungsschlüssigen Einklemmen des Elektrokabels, dadurch gekennzeichnet, daß lediglich zwei das Elektrokabel (13) einklemmende Walzen (10, 11) zwischen den Seitenwänden (2, 6) des schachtförmig gestalteten freien Vorratsraumes gelagert sind, im Mittelbereich der Schachtmündung (7') sitzen und die Länge (A) des Schachtes (7) ein Vielfaches der Breite (B) des Schachtes ausmacht.

2. Vorrichtung nach Anspruch 1, dadurch gekennzeichnet, daß die beiden Walzen (10, 11) zueinander in Zahneingriff stehen und der Drehantrieb aus einem Übersetzungs-Zahnriementrieb (17, 19, 21, 22, 23) besteht.

Claims

1. A device for the storage of electric cables, in particular on vacuum cleaners, having a rotary drive (16, 17, 18, 19, 20, 21, 22, 23) for pushing in the electric cable (13) and laying it in individual loops arranged on top of one another in a storage chamber (7), this rotary drive being coupled to rolls (10, 11) which are arranged at the entrey side of the storage chamber and which have grooves (12) for frictionally gripping the electric cable, characterized in that there are merely two rolls (10, 11) which grip the electric cable (13) and which are supported between the sidewalls (2, 6) of the free storage space shaped in the form of a shaft and are seated in the central region of the mouth (7') of the shaft, and the length (A) of the shaft (7) amounts to a multiple of the width (B) of the shaft.

2. A device as in claim 1, characterized in that the two rolls (10, 11) are geared together and the rotary drive consists of a step-up toothed belt drive (17, 19, 21, 22, 23).

## Revendications

1. Dispositif pour le stockage de rangement de câble électrique, notamment sur un aspirateur de poussière, avec un entraînement en rotation (10, 17, 12, 19, 20, 21, 22, 23) pour rassembler et déposer le câble électrique (13) en boucles individuelles superposées dans un espace de rangement (7) qui est accompli à l'entraînement en rotation avec des rouleaux (10, 11) disposés du côté entrée de l'espace de rangement, et qui sont pourvus de gorges (12) pour coïncer par frottement le câble électrique, dispositif caractérisé en ce que, simplement, deux rouleaux (10–11) de coïcement du câble électrique (13) sont supportés entre les parois latérales (2, 6) de l'espace de rangement en forme de puits, dans la zone centrale de l'embouchure (7') du puits, la longueur (A) du puits (7) étant égale à un multiple de sa largeur (B).

2. Dispositif suivant la revendication 1, caractérisé en ce que les deux rouleaux (10, 11) engrènent entre eux par dentures, et l'entraînement en rotation est constitué par un mécanisme à courroie dentée de transmission (17, 19, 21, 22, 23).

FIG.1

FIG. 2

FIG.3